(19) Europäisches Patentamt / European Patent Office / Office européen des brevets

(11) **EP 3 789 346 B1**

(12) **EUROPEAN PATENT SPECIFICATION**

(45) Date of publication and mention
of the grant of the patent:
**11.06.2025 Bulletin 2025/24**

(21) Application number: **19796324.2**

(22) Date of filing: **25.04.2019**

(51) International Patent Classification (IPC):
$C01G\ 25/00$ (2006.01)   $H01B\ 1/06$ (2006.01)
$H01B\ 1/08$ (2006.01)   $H01G\ 11/56$ (2013.01)
$H01M\ 4/13$ (2010.01)   $H01M\ 4/62$ (2006.01)
$H01M\ 10/052$ (2010.01)   $H01M\ 10/0562$ (2010.01)
$H01M\ 12/06$ (2006.01)   $H01M\ 12/08$ (2006.01)
$C04B\ 35/486$ (2006.01)   $C04B\ 35/626$ (2006.01)
$C04B\ 35/64$ (2006.01)   $H01G\ 11/06$ (2013.01)
$H01G\ 11/38$ (2013.01)   $H01M\ 10/0525$ (2010.01)

(52) Cooperative Patent Classification (CPC):
**H01G 11/06; C01G 25/006; C04B 35/486;
C04B 35/6261; C04B 35/6262; C04B 35/62645;
C04B 35/64; H01G 11/56; H01M 10/0562;**
C01P 2004/61; C01P 2004/62; C04B 2235/3203;
C04B 2235/3206; C04B 2235/3213;
C04B 2235/3227;                    (Cont.)

(86) International application number:
**PCT/JP2019/017561**

(87) International publication number:
**WO 2019/212026 (07.11.2019 Gazette 2019/45)**

(54) **LITHIUM BASED ION CONDUCTIVE POWDER, ION CONDUCTIVE MOLDED ARTICLE, AND ELECTRICITY STORAGE DEVICE**

IONENLEITENDES PULVER AUF LITHIUMBASIS, IONENLEITENDER FORMARTIKEL UND ELEKTRIZITÄTSSPEICHEREINRICHTUNG

POUDRE CONDUCTRICE D'IONS À BASE DE LITHIUM, ARTICLE MOULÉ CONDUCTEUR D'IONS ET DISPOSITIF DE STOCKAGE D'ÉLECTRICITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.05.2018 JP 2018087999**

(43) Date of publication of application:
**10.03.2021 Bulletin 2021/10**

(73) Proprietor: **Niterra Co., Ltd.
Nagoya-shi, Aichi 461-0005 (JP)**

(72) Inventors:
• **TAKEUCHI Yuki
Nagoya-shi, Aichi 467-8525 (JP)**
• **SHISHIHARA Daisuke
Nagoya-shi, Aichi 467-8525 (JP)**
• **HIKOSAKA Hideaki
Nagoya-shi, Aichi 467-8525 (JP)**
• **MIZUTANI Hidetoshi
Nagoya-shi, Aichi 467-8525 (JP)**

(74) Representative: **Zimmermann & Partner
Patentanwälte mbB
Postfach 330 920
80069 München (DE)**

(56) References cited:
EP-A1- 3 041 071      WO-A1-2017/123836
JP-A- 2014 172 812      JP-A- 2016 033 880
JP-A- 2016 040 767      JP-A- 2016 160 160
JP-A- 2017 091 788      KR-A- 20140 099 956

- LICHT STUART ET AL: "Electronic Supplementary Information (ESI) Chemical Mechanism of the High Solubility Pathway for the Carbon Dioxide Free Production of Iron (Chemical Communications)", 1 January 2011 (2011-01-01), pages 1 - 7, XP055966100, Retrieved from the Internet <URL:http://www.rsc.org/suppdata/cc/c0/c0cc05581f/c0cc05581f.pdf> [retrieved on 20220928]
- "Phase transformation of a garnet-type lithium-ion conductor LI7LA3ZR2O12", NETSU SOKUTEI (CALORIMETRY AND THERMAL ANALYSIS), vol. 42, 2015, pages 62 - 68, XP009523555, ISSN: 0386-2615
- YUTAO LI; BIYI XU; HENGHUI XU; HUANAN DUAN; XUJIE LÜ; SEN XIN; WEIDONG ZHOU; LEIGANG XUE; GENGTAO FU; ARUMUGAM MANTHIRAM; JOHN B G: "Hybrid Polymer/Garnet Electrolyte with a Small Interfacial Resistance for Lithium-Ion Batteries", ANGEWANDTE CHEMIE, vol. 56, no. 3, 9 December 2016 (2016-12-09), pages 753 - 756, XP055530355, ISSN: 1433-7851, DOI: 10.1002/anie.201608924

(52) Cooperative Patent Classification (CPC): (Cont.)
C04B 2235/442; C04B 2235/604; C04B 2235/6567; C04B 2235/658; C04B 2235/6587; C04B 2235/764; H01G 11/38; H01M 10/0525; H01M 2300/0068; Y02E 60/10; Y02T 10/70

## Description

TECHNICAL FIELD

The technique disclosed in the present specification relates to an ion conductive powder.

BACKGROUND ART

In recent years, an increasing demand has arisen for high-performance electricity storage devices in association with, for example, the prevalence of electronic apparatuses (e.g., personal computers and cellular phones) and electric-powered automobiles, and the growing use of natural energy such as sunlight or wind power. In particular, expectations are placed on the utilization of a complete-solid lithium ion secondary battery in which all battery elements are formed of a solid (hereinafter the battery may be referred to as a "complete-solid battery"). The complete-solid battery is free from, for example, leakage of an organic electrolytic solution or flashing, and thus is safer than a conventional lithium ion secondary battery containing an organic electrolytic solution prepared by dissolution of a lithium salt in an organic solvent. Since the complete-solid battery can be provided with a simple casing, the battery achieves an increase in energy density per unit mass or unit volume.

The complete-solid battery includes a solid electrolyte layer and an electrode, and the layer and the electrode contain a lithium-ion-conductive solid electrolyte. Such a solid electrolyte is composed of, for example, an ion conductor containing at least Li, Zr, La, and O and having a garnet-type structure or garnet-like structure. As has been known, a lithium carbonate ($Li_2CO_3$) layer of very low lithium ion conductivity is formed around the surface of a sintered body of such a solid electrolyte by reaction of the solid electrolyte with water and carbon dioxide contained in air. Meanwhile, there has been disclosed a technique for improving the lithium ion conductivity of, for example, a solid electrolyte layer by thinning of a lithium carbonate layer through polishing of the surface of a sintered body of such a solid electrolyte (see, for example, Patent Document 1).

PRIOR ART DOCUMENT

PATENT DOCUMENT

Patent Document 1: Japanese Patent Application Laid-Open (kokai) No. 2017-199539

WO 2017/123836 A1 describes lithium nickelatebased positive electrode active substance particles represented by formula $Li_{1+a}Ni_{1-b-c}Co_bM_cO_2$ wherein M is at least one element selected from the group consisting of Mn, Al, B, Mg, Ti, Sn, Zn and Zr; a coating compound Y comprising at least one element selected from the group consisting of Al, Mg, Zr, Ti and Si; and a coating compound Z comprising an Li element, in which the content of lithium hydroxide LiOH in the positive electrode active substance particles is not more than 0.40% by weight, a content of lithium carbonate $Li_2CO_3$ in the positive electrode active substance particles is not more than 0.65% by weight, and a weight ratio of the content of lithium carbonate to the content of lithium hydroxide is not less than 1.

JP 2016-160160 A describes an oxide sintered body containing LiLaZrO and having a garnet type crystal structure applicable to a solid electrolyte for a lithium ion battery. The oxide sintered body mainly contains oxide in which M (at least one element selected from Al, Nb and Ta) is solidsolved in a mother material represented by LiLaZrO and having a cubic system garnet type crystal structure. The oxide sintered body has a pore volume ratio of 0.5% or less. An atomic ratio of M to La is $0 \leq M/La \leq 0.15$, an atomic ratio of Li to La is $2 \leq Li/La \leq 2.5$ and an atomic ratio of Zr to La is $0.6 \leq Zr/La \leq 0.7$.

JP 2014-172812 A discloses a lithium ion conductive oxide comprising a firing step of firing a mixed material comprising a complex oxide having a pyrochlore structure including lanthanum and zirconium and a lithium compound.

EP 3 041 071 A1 discloses a lithium transition metal composite particle which includes a lithium transition metal oxide particle, a metal-doped layer formed by doping the lithium transition metal oxide particle, and LiF formed on the lithium transition metal oxide particle including the metal-doped layer.

KR 2014 0099956 A discloses a lithium transition metal oxide powder for use in rechargeable batteries, wherein a surface of a primary particle is coated with a first inner layer and a second outer layer. The second outer layer comprises a fluorine-containing polymer, and the first inner layer comprises a reaction product of the surface of the primary particle and the fluorine-containing polymer.

Licht Stuart et al. "Electronic Supplementary Information to "Chemical Mechanism of the High Solubility Pathway for the Carbon Dioxide Free Production of Iron" Chem. Commun. 47:3081-3083 (2011) discloses a method for manufacturing iron using Solar Thermal Electrochemical Photoprocessing (STEP).

SUMMARY OF THE INVENTION

PROBLEM TO BE SOLVED BY THE INVENTION

The present inventors have conducted extensive studies on the preparation of, for example, a solid electrolyte layer not by sintering or vapor deposition but by press molding of an ion conductive powder containing a lithium-ion-conductive solid electrolyte for the purpose of, for example, production of large-size batteries or simplification of a production process. An important consideration is that the amount of lithium carbonate, which has very low lithium ion conductivity, is reduced in a molded product (compact) formed by press molding of an ion conductive powder. However, the lithium ion conductivity cannot be sufficiently improved through only taking into account lithium carbonate present on the surface of the compact as in the case of the aforementioned conventional technique, which is problematic.

Such a problem is not limited to an ion conductive powder or a compact thereof used in a solid electrolyte layer or an electrode of a complete-solid lithium ion secondary battery, but is common with any ion conductive powder containing a lithium-ion-conductive solid electrolyte and a compact of the powder.

The present specification discloses a technique capable of solving the aforementioned problems, as set forth with the appended claims.

MEANS FOR SOLVING THE PROBLEM

The technique disclosed in the present specification can be implemented in, for example, the following modes.

(1) The present specification discloses an ion conductive powder according to claim 1 comprising a lithium-ion-conductive solid electrolyte which is an ion conductor containing at least Li, Zr, La, and O and having a garnet-type structure or a garnet-like structure, wherein the amount of $Li_2CO_3$ contained in 1 g of the lithium-ion-conductive solid electrolyte is less than 3 mg as calculated on the basis of the amount of $CO_2$ determined through TPD-MS (temperature programmed desorption mass spectrometry) at 500°C or higher. The present inventors have conducted extensive studies, and as a result have newly found that when the amount of lithium carbonate contained in 1 g of the lithium-ion-conductive solid electrolyte is less than 3 mg in the ion conductive powder, the lithium ion conductivity of a molded product (compact) formed by press molding of the ion conductive powder can be sufficiently improved. Although the amount of lithium carbonate is difficult to determine through XRD or SEM in the ion conductive powder, the amount of lithium carbonate can be determined through TPD-MS in the ion conductive powder.

(2) In the ion conductive powder, the ion conductor may contain at least one element selected from the group consisting of Mg, Al, Si, Ca, Ti, V, Ga, Sr, Y, Nb, Sn, Sb, Ba, Hf, Ta, W, Bi, and lanthanoids. The ion conductive powder can achieve a more effective improvement in lithium ion conductivity.

(3) In the ion conductive powder, the ion conductor contains at least one of Mg and element A (wherein A represents at least one element selected from the group consisting of Ca, Sr, and Ba), and the elements contained in the ion conductor satisfy the following mole ratio conditions (1) to (3):

(1) $1.33 \leq Li/(La + A) \leq 3$;

(2) $0 \leq Mg/(La + A) \leq 0.5$;

and

(3) $0 \leq A/(La + A) \leq 0.67$.

The ion conductive powder can achieve a more effective improvement in lithium ion conductivity.

(4) The ion conductive powder may further comprise at least one of a lithium halide and a complex hydride. The ion conductive powder comprises at least one of a lithium halide and a complex hydride, each of which exhibits relatively low ion conductivity but is likely to enhance close contact between particles because the particles are relatively soft, in addition to the aforementioned ion conductor containing at least Li, Zr, La, and O and having a garnet-type structure or a garnet-like structure, the ion conductor exhibiting relatively high ion conductivity but being less likely to enhance close contact between particles because the particles are relatively hard. Thus, when a molded product (compact) is formed by press molding of the ion conductive powder, the lithium ion conductivity of the compact can be more effectively improved.

(5) In the ion conductive powder, the powder of the lithium-ion-conductive solid electrolyte may have a mean particle size of 0.1 $\mu$m or more. The ion conductive powder can prevent an excessive decrease in the mean particle size of the powder of the lithium-ion-conductive solid electrolyte, thereby preventing an excessive increase in the area of the interface between particles (due to an excessive decrease in the particle size of the powder) and thus preventing an increase in interface resistance.

(6) In the ion conductive powder, the powder of the lithium-ion-conductive solid electrolyte may have a mean particle size of 0.5 $\mu$m or more. The ion conductive powder can effectively prevent an excessive decrease in the mean particle size of the powder of the lithium-ion-conductive solid electrolyte, resulting in effective prevention of an excessive increase in the area of the interface between particles (due to an excessive decrease in the particle size of the powder) and thus effective prevention of an increase in interface resistance.

(7) In the ion conductive powder, the powder of the lithium-ion-conductive solid electrolyte may have a mean particle size of 10 $\mu$m or less. Since the ion conductive powder has a relatively small mean particle size, the amount of lithium carbonate relative to that of the lithium-ion-conductive solid electrolyte tends to increase. However, the lithium carbonate content of the ion conductive powder can be reduced. Thus, the lithium ion conductivity of a molded product (compact) formed by press molding of the ion conductive powder can be sufficiently improved.

(8) The present specification also discloses an ion conductive compact according to claim 7 formed from the ion conductive powder described above. The ion conductive compact can exhibit sufficiently improved lithium ion conductivity.

(9) The present specification also discloses an electricity storage device according to claim 8 comprising a solid electrolyte layer, a cathode, and an anode, wherein at least one of the solid electrolyte layer, the cathode, and the anode contains the ion conductive powder described above. According to the electricity storage device, the lithium ion conductivity of at least one of the solid electrolyte layer, the cathode, and the anode can be sufficiently improved. Thus, the electric performance of the electricity storage device can be sufficiently improved.

The technique disclosed in the present specification can be implemented in various modes; for example, an ion conductive powder, an ion conductive compact formed from the ion conductive powder, an electricity storage device containing the ion conductive powder, and a production method therefor, as set forth with the appended claims.

BRIEF DESCRIPTION OF THE DRAWINGS

FIG. 1 is an explanatory view schematically showing a cross section of a complete-solid lithium ion secondary battery 102 according to the present embodiment.
FIG. 2 is a table showing the results of performance evaluation.
FIG. 3 is a table showing the results of performance evaluation.

MODES FOR CARRYING OUT THE INVENTION

A. Embodiment:

A-1. Structure of complete-solid battery 102:

(Entire structure)

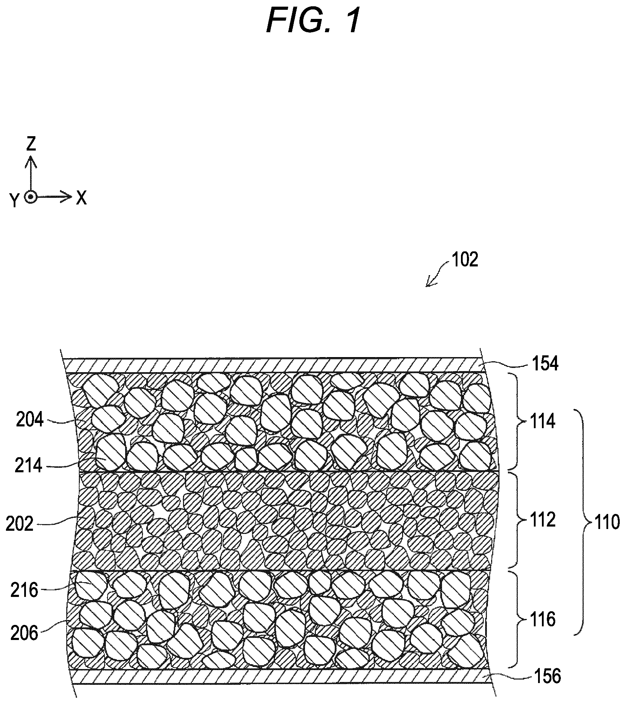

FIG. 1 is an explanatory view schematically showing a cross section of a complete-solid lithium ion secondary battery (hereinafter will be referred to as "complete-solid battery") 102 according to the present embodiment. FIG. 1 shows mutually orthogonal X-axis, Y-axis, and Z-axis for specifying respective directions. In the present specification, for the sake of convenience, the positive Z-axis direction is called the "upward direction," and the negative Z-axis direction is called the "downward direction."

The complete-solid battery 102 includes a battery body 110, a cathode-side collector member 154 disposed on one side (upper side) of the battery body 110, and an anode-side collector member 156 disposed on the other side (lower side) of the battery body 110. Each of the cathode-side collector member 154 and the anode-side collector member 156 is an electrically conductive member having an approximately flat-plate shape, and is formed of, for example, an electrically conductive metal material selected from among stainless steel, Ni (nickel), Ti (titanium), Fe (iron), Cu (copper), Al (aluminum), and alloys of these, or a carbon material. In the following description, the cathode-side collector member 154 and the anode-side collector member 156 may be collectively referred to as "collector members."

(Structure of battery body 110)

The battery body 110 is a lithium ion secondary battery body in which all battery elements are formed of a solid. As used herein, the phrase "all battery elements are formed of a solid" refers to the case where the skeletons of all battery elements are formed of a solid, but does not exclude the case where, for example, any of the skeletons is impregnated with a liquid. The battery body 110 includes a cathode 114, an anode 116, and a solid electrolyte layer 112 disposed between the cathode 114 and the anode 116. In the following description, the cathode 114 and the anode 116 may be collectively referred to as "electrodes." The battery body 110 corresponds to an electricity storage device claimed in CLAIMS.

(Structure of solid electrolyte layer 112)

The solid electrolyte layer 112 is a member having an approximately flat-plate shape, and contains an ion conductive powder 202 containing a lithium-ion-conductive solid electrolyte. More specifically, the solid electrolyte layer 112 is a molded product (compact) formed by press molding of the ion conductive powder 202 containing a lithium-ion-conductive solid electrolyte. The structure of the ion conductive powder 202 contained in the solid electrolyte layer 112 will be described in detail below.

(Structure of cathode 114)

The cathode 114 is a member having an approximately flat-plate shape and contains a cathode active material 214. The cathode active material 214 is, for example, S (sulfur), $TiS_2$, $LiCoO_2$, $LiMn_2O_4$, or $LiFePO_4$. The cathode 114 contains, as a lithium-ion-conducting aid, an ion conductive powder 204 containing a lithium-ion-conductive solid electrolyte. The cathode 114 may further contain an electron-conducting aid (e.g., electrically conductive carbon, Ni (nickel), Pt (platinum), or Ag (silver)).

(Structure of anode 116)

The anode 116 is a member having an approximately flat-plate shape and contains an anode active material 216. The anode active material 216 is, for example, Li metal, Li-Al alloy, $Li_4Ti_5O_{12}$, carbon, Si (silicon), or SiO. The anode 116 contains, as a lithium-ion-conducting aid, an ion conductive powder 206 containing a lithium-ion-conductive solid electrolyte. The cathode 116 may further contain an electron-conducting aid (e.g., electrically conductive carbon, Ni, Pt, or Ag).

A-2. Structure of ion conductive powder:

Next will be described the structure of the ion conductive powder 202 contained in the solid electrolyte layer 112. The ion conductive powder 204 contained in the cathode 114 and the ion conductive powder 206 contained in the anode 116 have the same structure as that of the ion conductive powder 202 contained in the solid electrolyte layer 112. Thus, description of the powders 204 and 206 is omitted.

In the present embodiment, the ion conductive powder 202 contained in the solid electrolyte layer 112 contains a lithium-ion-conductive solid electrolyte. The lithium-ion-conductive solid electrolyte used in the present embodiment is an ion conductor containing at least Li, Zr, La, and O and having a garnet-type structure or a garnet-like structure (hereinafter the ion conductor will be referred to as the "LLZ lithium ion conductor"). Examples of the ion conductor include $Li_7La_3Zr_2O_{12}$ (hereinafter will be referred to as "LLZ") and a product prepared by substitution of LLZ with elemental Mg (magnesium) and Sr (strontium) (hereinafter the product will be referred to as "LLZ-MgSr"). Such an ion conductor exhibits stability to lithium metal and has relatively high lithium ion conductivity, and thus is suitable as a lithium-ion-conductive solid electrolyte contained in the ion conductive powder 202. A preferred embodiment of the LLZ lithium ion conductor will be described below.

The ion conductive powder 202 may further contain at least one of a lithium halide and a complex hydride. The aforementioned ion conductor having a garnet-type structure or a garnet-like structure is relatively hard in the form of powder. Thus, in a molded product (compact) formed by press molding of the powder, the degree of contact between particles is low, and lithium ion conductivity is relatively low. Meanwhile, a lithium halide or a complex hydride exhibits relatively low lithium ion conductivity, but is relatively soft in the form of powder. Thus, the close contact between particles is readily enhanced through pressing of the powder.

Therefore, when the ion conductive powder 202 contains at least one of a lithium halide and a complex hydride in addition to the aforementioned ion conductor having a garnet-type structure or a garnet-like structure, the close contact between particles can be enhanced through press molding of the powder alone, without firing or vapor deposition, and the resultant molded product (compact) exhibits high lithium ion conductivity.

The lithium halide to be incorporated into the ion conductive powder 202 may be one or more species of, for example, LiCl, LiBr, and LiI. The complex hydride to be incorporated into the ion conductive powder 202 may be one or more species of, for example, $LiBH_4$, $LiNH_2$, $LiBH_4 \cdot 3KI$, $LiBH_4 \cdot PI_2$, $LiBH_4 \cdot P_2S_5$, $Li_2AlH_6$, $Li(NH_2)_2I$, $3LiBH_4 \cdot LiI$, $Li_2NH$, $LiGd(BH_4)_3Cl$, $Li_2(BH_4)(NH_2)$, and $Li_4(BH_4)(NH_2)_3$.

The ion conductive powder 202 preferably contains an ion conductor containing at least Li, Zr, La, and O and having a garnet-type structure or a garnet-like structure (e.g., LLZ or LLZ-MgSr) in an amount of 30 vol% (% by volume) or more. The ion conductive powder 202 preferably contains a lithium-ion-conductive material (e.g., LLZ, a lithium halide, or a complex hydride) in an amount of 90 vol% or more.

In some cases, the ion conductive powder 202 may contain lithium carbonate ($Li_2CO_3$). Specifically, lithium carbonate may be generated by reaction of the lithium-ion-conductive solid electrolyte contained in the ion conductive powder 202 with water and carbon dioxide contained in air. Since lithium carbonate has extremely low lithium ion conductivity (i.e., about $\leq 1/100,000$ of that of the lithium-ion-conductive solid electrolyte), the amount of lithium carbonate present in ion conductive powder 202 is preferably small.

In the ion conductive powder 202 of the present embodiment, the amount of lithium carbonate contained in 1 g of the lithium-ion-conductive solid electrolyte is less than 3 mg. The amount of lithium carbonate contained in 1 g of the lithium-ion-conductive solid electrolyte is more preferably less than 2 mg, still more preferably less than 1 mg. The amount of lithium carbonate contained in the ion conductive powder 202 can be calculated on the basis of the amount of $CO_2$ determined through TPD-MS (temperature programmed desorption mass spectrometry) at 500°C or higher. The calculation of the amount of lithium carbonate on the basis of the amount of $CO_2$ determined at 500°C or higher can eliminate, for example, the influence of the amount of $CO_2$ derived from another material (e.g., binder) contained in the ion conductive powder 202. For the determination through TPD-MS, the TPD-MS apparatus is placed in an environment with a low dew point (-50°C or lower), and the measurement target (ion conductive powder 202) is treated in the environment.

Since the amount of lithium carbonate contained in 1 g of the lithium-ion-conductive solid electrolyte is very small (i.e., less than 3 mg) in the ion conductive powder 202 of the present embodiment as described above, an increase in resistance at particle interfaces (which is caused by the presence of lithium carbonate) can be reduced in a molded product (compact) formed by press molding of the ion conductive powder 202, and the lithium ion conductivity of the compact can be sufficiently improved. As described above, when the amount of lithium carbonate is determined through TPD-MS, the TPD-MS apparatus is placed in an environment with a low dew point, and the measurement target is treated in the environment. Thus, an excessive increase in the amount of lithium carbonate can be prevented during determination of the amount of lithium carbonate contained in the ion conductive powder 202, and the amount of lithium carbonate contained in 1 g of the lithium-ion-conductive solid electrolyte can be accurately determined. In general, a relatively small particle size of the ion conductive powder 202 leads to a relatively large specific surface area, resulting in a tendency of the amount of lithium carbonate to increase during determination of the amount. According to the aforementioned determination method, even when the measurement target is the ion conductive powder 202 having a relatively small particle size, an excessive increase in the amount of lithium carbonate can be prevented during determination of the amount, and the amount of lithium carbonate contained in 1 g of the lithium-ion-conductive solid electrolyte can be accurately determined.

Unlike the case of a bulky product (e.g., a sintered body), the ion conductive powder 202 encounters difficulty in determining the amount of lithium carbonate contained therein by XRD or SEM. However, in the present embodiment, the amount of lithium carbonate contained in the ion conductive powder 202 can be determined through TPD-MS.

The powder of the lithium-ion-conductive solid electrolyte contained in the aforementioned ion conductive powder 202 has a mean particle size of preferably 0.1 $\mu$m or more, more preferably 0.5 $\mu$m or more. When the powder of the lithium-ion-conductive solid electrolyte has a mean particle size of 0.1 $\mu$m or more, an excessive decrease in the mean particle size of the powder of the lithium-ion-conductive solid electrolyte can be prevented, resulting in prevention of an excessive increase in the area of the interface between particles (due to an excessive decrease in the particle size of the powder) and thus prevention of an increase in interface resistance. When the powder of the lithium-ion-conductive solid electrolyte has a mean particle size of 0.5 $\mu$m or more, an excessive decrease in the mean particle size of the powder of the lithium-ion-conductive solid electrolyte can be effectively prevented, resulting in effective prevention of an excessive increase in the area of the interface between particles (due to an excessive decrease in the particle size of the powder) and thus effective prevention of an increase in interface resistance. The powder of the lithium-ion-conductive solid electrolyte has a mean particle size of more preferably 5 $\mu$m or more, still more preferably 10 $\mu$m or more. The powder of the lithium-ion-conductive solid electrolyte has a mean particle size of preferably 150 $\mu$m or less, still more preferably 100 $\mu$m or less.

The powder of the lithium-ion-conductive solid electrolyte contained in the aforementioned ion conductive powder 202 may have a mean particle size of 10 $\mu$m or less. In such a case where the mean particle size is relatively small, the amount of lithium carbonate relative to that of the lithium-ion-conductive solid electrolyte tends to increase. However, according to the ion conductive powder of the present embodiment, the amount of lithium carbonate can be reduced, and thus the lithium ion conductivity of a molded product (compact) formed by press molding of the ion conductive powder can be sufficiently improved.

A-3. Production method for complete-solid battery 102:

Next will be described an exemplary production method for the complete-solid battery 102 of the present embodiment. Firstly, the solid electrolyte layer 112 is formed. Specifically, there is provided the ion conductive powder 202 which contains a lithium-ion-conductive solid electrolyte and which has been stored in a non-air-exposed environment (e.g., a glove box) for preventing it from being exposed to air. Even if the ion conductive powder 202 has been exposed to air, the powder can be used so long as the amount of lithium carbonate contained in 1 g of the lithium-ion-conductive solid electrolyte is less than 3 mg as calculated on the basis of the amount of $CO_2$ determined through TPD-MS at 500°C or higher. The solid electrolyte layer 112, which is a molded product (compact) of the ion conductive powder 202, is formed by press molding of the ion conductive powder 202 at a predetermined pressure.

Subsequently, the cathode 114 and the anode 116 are formed. Specifically, a powder of the cathode active material 214, the ion conductive powder 204, and an optional electron-conducting aid powder are mixed in predetermined proportions, and the resultant powder mixture is pulverized and then subjected to molding, to thereby form the cathode 114. Separately, a powder of the anode active material 216, the ion conductive powder 206, and an optional electron-conducting aid powder are mixed, and the resultant powder mixture is pulverized and then subjected to molding, to thereby form the anode 116.

Thereafter, the cathode-side collector member 154, the cathode 114, the solid electrolyte layer 112, the anode 116, and the anode-side collector member 156 are stacked in this order, and then integrated together by pressing. The complete-solid battery 102 having the aforementioned structure is produced through the above-described process.

A-4. Preferred embodiment of LLZ lithium ion conductor:

As described above, the ion conductive powder of the present embodiment contains an LLZ lithium ion conductor (lithium ion conductor containing at least Li, La, Zr, and O and having a garnet-type structure or a garnet-like structure). The LLZ lithium ion conductor preferably contains at least one element selected from the group consisting of Mg, Al, Si, Ca (calcium), Ti, V (vanadium), Ga (gallium), Sr, Y (yttrium), Nb (niobium), Sn (tin), Sb (antimony), Ba (barium), Hf (hafnium), Ta (tantalum), W (tungsten), Bi (bismuth), and lanthanoids. The LLZ lithium ion conductor having such a composition exhibits good lithium ion conductivity.

Preferably, the LLZ lithium ion conductor contains at least one of Mg and element A (wherein A represents at least one element selected from the group consisting of Ca, Sr, and Ba), wherein these elements satisfy the following mole ratio conditions (1) to (3). Mg and element A are present in relatively large amounts in the earth and inexpensive. Thus, when Mg and/or element A is used as a substitution element for the LLZ lithium ion conductor, the LLZ lithium ion conductor is expected to be reliably supplied and produced at low cost.

$$(1) \quad 1.33 \leq Li/(La + A) \leq 3;$$

$$(2) \quad 0 \leq Mg/(La + A) \leq 0.5;$$

and

$$(3) \quad 0 \leq A/(La + A) \leq 0.67.$$

More preferably, the LLZ lithium ion conductor contains both Mg and element A, wherein these elements satisfy the following mole ratio conditions (1') to (3'):

$$(1') \quad 2.0 \leq Li/(La + A) \leq 2.7;$$

$$(2') \quad 0.01 \leq Mg/(La + A) \leq 0.14;$$

and

$$(3') \quad 0.04 \leq A/(La + A) \leq 0.17.$$

In other words, the LLZ lithium ion conductor preferably satisfies any of the following (a) to (c), more preferably (c), still more preferably (d).

(a) The LLZ lithium ion conductor contains Mg, wherein the amounts of the elements satisfy the mole ratio conditions: $1.33 \leq Li/La \leq 3$ and $0 \leq Mg/La \leq 0.5$.
(b) The LLZ lithium ion conductor contains element A, wherein the amounts of the elements satisfy the mole ratio conditions: $1.33 \leq Li/(La + A) \leq 3$ and $0 \leq A/(La + A) \leq 0.67$.
(c) The LLZ lithium ion conductor contains Mg and element A, wherein the amounts of the elements satisfy the mole ratio conditions: $1.33 \leq Li/(La + A) \leq 3$, $0 \leq Mg/(La + A) \leq 0.5$, and $0 \leq A/(La + A) \leq 0.67$.
(d) The LLZ lithium ion conductor contains Mg and element A, wherein the amounts of the elements satisfy the mole ratio conditions: $2.0 \leq Li/(La + A) \leq 2.7$, $0.01 \leq Mg/(La + A) \leq 0.14$, and $0.04 \leq A/(La + A) \leq 0.17$.

When the LLZ lithium ion conductor satisfies the aforementioned (a); i.e., when the LLZ lithium ion conductor contains Li, La, Zr, and Mg so as to satisfy the aforementioned mole ratio conditions: (1) and (2), the LLZ lithium ion conductor exhibits good lithium ion conductivity. Although the mechanism therefor has not clearly been elucidated, a conceivable reason is as follows. In the case where, for example, the LLZ lithium ion conductor contains Mg, the ionic radius of Li is almost equivalent to that of Mg, and thus Mg is readily placed in Li sites where Li is originally present in the LLZ crystal phases. When Mg replaces Li, pores are provided at some Li sites in the crystal structure, due to the difference in amount of electric charge between Li and Mg, thereby conceivably enhancing the mobility of Li ions. As a result, lithium ion conductivity may be improved. In the LLZ lithium ion conductor, when the mole ratio of Li to the sum of La and element A is smaller than 1.33 or greater than 3, a metal oxide other than the lithium ion conductor having a garnet-type or garnet-like crystal structure is readily formed. An increase in the metal oxide content leads to a relative decrease in the amount of the lithium ion conductor having a garnet-type or garnet-like crystal structure. Since the metal oxide has low lithium ion conductivity, the lithium ion conductivity of the LLZ lithium ion conductor is reduced. An increase in the Mg content of the LLZ lithium ion conductor leads to placement of Mg in Li sites and provision of pores at some Li sites, resulting in an improvement in lithium ion conductivity. When the mole ratio of Mg to the sum of La and element A is in excess of 0.5, an Mg-containing metal oxide is readily formed. An increase in the Mg-containing metal oxide content leads to a relative decrease in the amount of the lithium ion conductor having a garnet-type or garnet-like crystal structure. The Mg-containing metal oxide has low lithium ion conductivity. Thus, when the mole ratio of Mg to the sum of La and element A is in excess of 0.5, the lithium ion conductivity of the LLZ lithium ion conductor is reduced.

When the LLZ lithium ion conductor satisfies the aforementioned (b); i.e., when the LLZ lithium ion conductor contains Li, La, Zr, and element A so as to satisfy the mole ratio conditions (1) and (3), the LLZ lithium ion conductor exhibits good lithium ion conductivity. Although the mechanism therefor has not clearly been elucidated, a conceivable reason is as follows. In the case where, for example, the LLZ lithium ion conductor contains element A, the ionic radius of La is almost equivalent to that of element A, and thus element A is readily placed in La sites where La is originally present in the LLZ crystal phases. When element A replaces La, the crystal lattice deforms, and free Li ions increase due to the difference in amount of electric charge between La and element A, thereby conceivably improving lithium ion conductivity. In the LLZ lithium ion conductor, when the mole ratio of Li to the sum of La and element A is smaller than 1.33 or greater than 3, a metal oxide other than the lithium ion conductor having a garnet-type or garnet-like crystal structure is readily formed. An increase in the metal oxide content leads to a relative decrease in the amount of the lithium ion conductor having a garnet-type or garnet-like crystal structure. Since the metal oxide has low lithium ion conductivity, the lithium ion conductivity of the LLZ lithium ion conductor is reduced. An increase in the element A content of the LLZ lithium ion conductor leads to placement of element A in La sites. As a result, the lattice deformation increases, and free Li ions increase due to the difference in amount of electric charge between La and element A, thereby improving lithium ion conductivity. When the mole ratio of element A to the sum of La and element A is in excess of 0.67, an element A-containing metal oxide is readily formed. An increase in the element A-containing metal oxide content leads to a relative decrease in the amount of the lithium ion conductor having a garnet-type or garnet-like crystal structure. Since the element A-containing metal oxide has low lithium ion conductivity, the lithium ion conductivity of the LLZ lithium ion conductor is reduced.

The aforementioned element A is at least one element selected from the group consisting of Ca, Sr, and Ba. Ca, Sr, and Ba are group 2 elements defined in the relevant periodic table, and readily form divalent cations. These elements have almost the same ionic radius. Since the ionic radius of each of Ca, Sr, and Ba is almost the same as that of La, La elements present in the La sites of the LLZ lithium ion conductor are readily substituted with Ca, Sr, or Ba. Among these elements A, Sr is preferred, since the LLZ lithium ion conductor containing Sr can be readily formed through sintering, to thereby achieve high lithium ion conductivity.

When the LLZ lithium ion conductor satisfies the aforementioned (c); i.e., when the LLZ lithium ion conductor contains Li, La, Zr, Mg, and element A so as to satisfy the mole ratio conditions (1) to (3), the ion conductor can be readily formed through sintering, to thereby achieve further improved lithium ion conductivity. When the LLZ lithium ion conductor satisfies the aforementioned (d); i.e., when the LLZ lithium ion conductor contains Li, La, Zr, Mg, and element A so as to satisfy the mole ratio conditions (1') to (3'), the lithium ion conductivity is further improved. Although the mechanism therefor has not clearly been elucidated, a conceivable reason is as follows. In the LLZ lithium ion conductor, when, for example, Li in Li sites is substituted by Mg, and La in La sites is substituted by element A, pores are provided at some Li sites, and free Li ions increase. As a result, the lithium ion conductivity may be further improved. More preferably, the LLZ lithium ion conductor contains Li, La, Zr, Mg, and Sr so as to satisfy the aforementioned conditions (1) to (3) (in particular (1') to (3')), since, in this case, the resultant lithium ion conductor has high lithium ion conductivity and high relative density.

In any of the aforementioned conditions (a) to (d), the LLZ lithium ion conductor preferably contains Zr so as to satisfy the following mole ratio condition (4). When Zr is contained under the condition (4), a lithium ion conductor having a garnet-type or garnet-like crystal structure can be readily produced.

$$(4)\quad 0.33 \leq Zr/(La + A) \leq 1$$

A-5. Performance evaluation:

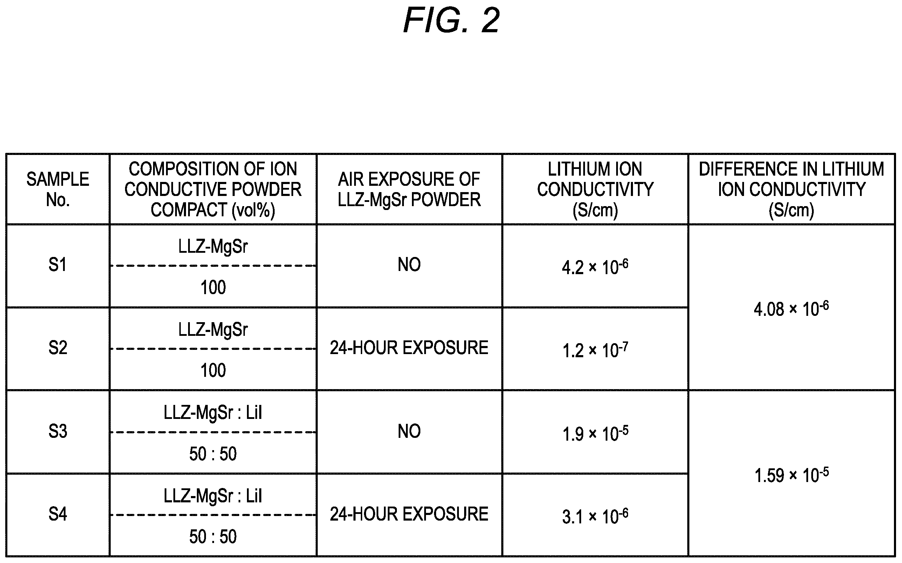

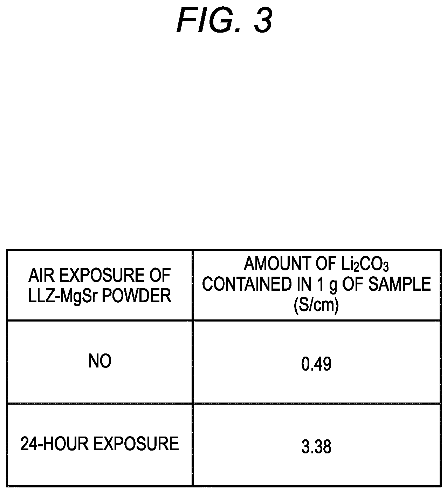

Ion conductive powders 202, 204, and 206 contained in the respective layers (solid electrolyte layer 112, cathode 114, and anode 116) of a complete-solid battery 102 were evaluated for lithium ion conductivity. FIGs. 2 and 3 are tables showing the results of performance evaluation.

As shown in FIG. 2, four samples (S1 to S4); i.e., molded products (compacts) of ion conductive powder were used for the performance evaluation. These samples have difference in compositions of ion conductive powder compacts. More specifically, samples S1 and S2 were compacts prepared from LLZ-MgSr as a lithium-ion-conductive solid electrolyte. Meanwhile, samples S3 and S4 were compacts prepared from an ion conductive powder containing LLZ-MgSr (lithium-ion-conductive solid electrolyte) and LiI (lithium halide) in volume proportions of 50:50.

These samples are different from one another in terms of air exposure time of LLZ-MgSr powder as a lithium-ion-conductive solid electrolyte. More specifically, samples S1 and S3 were prepared from non-air-exposed LLZ-MgSr. Meanwhile, samples S2 and S4 were prepared from LLZ-MgSr exposed to air for 24 hours.

The samples used for the performance evaluation were prepared as follows. A method for evaluation of the samples will be described below.

$Li_2CO_3$, $MgO$, $La(OH)_3$, $SrCO_3$, and $ZrO_2$ were weighed so as to achieve a composition of $Li_{6.95}Mg_{0.15}La_{2.75}Sr_{0.25}Zr_{2.0}O_{12}$ (LLZ-MgSr). In consideration of volatilization of Li during firing, $Li_2CO_3$ was further added so that the amount of elemental Li was in excess by about 15 mol%. These raw materials were added to a nylon pot together with zirconia balls, and the resultant mixture was pulverized by means of a ball mill in an organic solvent for 15 hours. Thereafter, the resultant slurry was dried and then calcined on an MgO plate at 1,100°C for 10 hours. A binder was added to the calcined powder, and the mixture was subjected to pulverization by means of a ball mill in an organic solvent for 15 hours. Thereafter, the resultant slurry was dried, and the dried material was added to a mold having a diameter of 12 mm. The material was press-molded so as to have a thickness of about 1.5 mm, and then the molded product was pressed at an isostatic pressure of 1.5 t/cm² by means of a cold isostatic pressing (CIP) machine, to thereby form a compact. The compact was covered with a calcination powder having the same composition as that of the compact and fired in a reducing atmosphere at 1,100°C for four hours, to thereby yield a sintered body. The sintered body was found to have a lithium ion conductivity of $1.0 \times 10^{-3}$ S/cm. The sintered body was pulverized in a glove box with an argon atmosphere, to thereby prepare a powder of LLZ-MgSr used for samples S1 and S3 (hereinafter the powder may be referred to as "non-air-exposed powder"). The powder of LLZ-MgSr was found to have a mean particle size of 73 μm. Separately, the powder prepared by pulverization of the sintered body was exposed to air for 24 hours, to thereby prepare a powder of LLZ-MgSr used for samples S2 and S4 (hereinafter the powder may be referred to as "air-exposed powder").

The amount of lithium carbonate was calculated in each of the non-air-exposed powder of LLZ-MgSr and the air-exposed powder of LLZ-MgSr. Specifically, gas having a molecular weight of 44 ($CO_2$) detected through TPD-MS (temperature programmed desorption mass spectrometry) at 500°C or higher (e.g., 600°C to 900°C) was assumed to be derived from lithium carbonate, and the amount of lithium carbonate contained in each powder sample was calculated by use of a calibration curve of a standard sample of lithium carbonate. The quantitative determination was performed on the basis of the peak area. As shown in FIG. 3, the amount of lithium carbonate contained in 1 g of the sample was 0.49 mg (non-air-exposed powder) or 3.38 mg (air-exposed powder). Thus, the amount of lithium carbonate contained in the non-air-exposed powder was about 1/10 that of lithium carbonate contained in the air-exposed powder

The non-air-exposed powder of LLZ-MgSr (for sample S1) or the air-exposed powder of LLZ-MgSr (for sample S2) was added to a mold having a diameter of 10 mm, and the powder was press-molded at a pressure of 360 MPa, to thereby form a molded product (compact). The compact was fixed with a force corresponding to 50 MPa by means of a pressing jig, and the lithium ion conductivity of the compact was determined at room temperature.

The non-air-exposed powder of LLZ-MgSr and LiI powder (for sample S3) or the air-exposed powder of LLZ-MgSr and LiI powder (for sample S4) were mixed in volume proportions of 50:50 (total: 2 g), and the mixture was pulverized by means of a planetary ball mill including a zirconia pot (45 cc) and balls having a diameter of 4 mm (96.5 g) at 200 rpm for three hours, to thereby prepare a powder mixture. The powder mixture was added to a mold having a diameter of 10 mm, and the powder mixture was press-molded at a pressure of 360 MPa, to thereby form a molded product (compact). The compact was fixed with a force corresponding to 50 MPa by means of a pressing jig, and the lithium ion conductivity of the compact was determined at room temperature.

(Results of performance evaluation)

As shown in FIG. 2, sample S1 prepared from the non-air-exposed powder of LLZ-MgSr exhibited a lithium ion conductivity of $4.2 \times 10^{-6}$ S/cm. In contrast, sample S2 prepared from the air-exposed powder of LLZ-MgSr exhibited a lithium ion conductivity of $1.2 \times 10^{-7}$ S/cm. Thus, sample S1 prepared from the non-air-exposed powder of LLZ-MgSr exhibited a lithium ion conductivity higher by $4.08 \times 10^{-6}$ S/cm than that of sample 2.

As shown in FIG. 2, sample S3 prepared from the powder mixture of the non-air-exposed powder of LLZ-MgSr and LiI powder exhibited a lithium ion conductivity of $1.9 \times 10^{-5}$ S/cm. In contrast, sample S4 prepared from the powder mixture of the air-exposed powder of LLZ-MgSr and LiI powder exhibited a lithium ion conductivity of $3.01 \times 10^{-6}$ S/cm. Thus, sample S3 prepared from the non-air-exposed powder of LLZ-MgSr exhibited a lithium ion conductivity higher by $1.59 \times 10^{-5}$ S/cm than that of sample 4.

These results indicated that when the ion conductive powder in which the amount of lithium carbonate contained in 1 g of the lithium-ion-conductive solid electrolyte is less than 3 mg (0.49 mg) is used (see sample S1 or S3), the close contact between particles can be enhanced through press molding of the powder alone, without firing or vapor deposition, and the resultant compact exhibits high lithium ion conductivity.

The difference in lithium ion conductivity ($1.59 \times 10^{-5}$ S/cm) between samples S3 and S4, which were prepared from the mixture of the powder of lithium-ion-conductive solid electrolyte (LLZ-MgSr) and the powder of lithium halide (LiI), was greater than the difference in lithium ion conductivity ($4.08 \times 10^{-6}$ S/cm) between samples S1 and S2, which were prepared from only the powder of lithium-ion-conductive solid electrolyte (LLZ-MgSr). Thus, the effect of improving lithium ion conductivity by using the ion conductive powder in which the amount of lithium carbonate contained in 1 g of the lithium-ion-conductive solid electrolyte is less than 3 mg is more remarkable in the case where the lithium-ion-conductive solid electrolyte is used in combination with the lithium halide.

B. Modifications:

The technique disclosed in the present specification is not limited to the aforementioned embodiment, but may be modified into various other forms without departing from the gist thereof. For example, the technique may be modified as described below.

In the aforementioned embodiment, the configuration of the complete-solid battery 102 is a mere example, and may be modified into various forms. For example, in the aforementioned embodiment, the ion conductive powder containing the lithium-ion-conductive solid electrolyte is contained in all of the solid electrolyte layer 112, the cathode 114, and the anode 116. However, the ion conductive powder may be contained in at least one of the solid electrolyte layer 112, the cathode 114, and the anode 116.

The technique disclosed in the present specification is not limited to the solid electrolyte layer or electrode forming the complete-solid battery 102, but can also be applied to a solid electrolyte layer or electrode forming another electricity storage device (e.g., a lithiumair battery, a lithium flow battery, or a solid capacitor).

DESCRIPTION OF REFERENCE NUMERALS

102: complete-solid lithium ion secondary battery; 110: battery body; 112: solid electrolyte layer; 114: cathode; 116: anode; 154: cathode-side collector member; 156: anode-side collector member; 202: ion conductive powder; 204: ion conductive powder; 206: ion conductive powder; 214: cathode active material; and 216: anode active material

**Claims**

1. An ion conductive powder (202, 204, 206) comprising a lithium-ion-conductive solid electrolyte which is an ion conductor containing at least Li, Zr, La, and O and having a garnet-type structure or a garnet-like structure, wherein the amount of $Li_2CO_3$ contained in 1 g of the lithium-ion-conductive solid electrolyte is less than 3 mg as calculated on the basis of the amount of $CO_2$ determined through temperature programmed desorption mass spectrometry (TPD-MS) at 500°C or higher, wherein the ion conductor contains at least one of Mg and element A (wherein A represents at least one element selected from the group consisting of Ca, Sr, and Ba), and the elements contained in the ion conductor satisfy the following mole ratio conditions (1) to (3):

   $$(1) \quad 1.33 \leq Li/(La + A) \leq 3;$$

   $$(2) \quad 0 \leq Mg/(La + A) \leq 0.5;$$

   and

   $$(3) \quad 0 \leq A/(La + A) \leq 0.67.$$

2. An ion conductive powder (202, 204, 206) according to claim 1, wherein the ion conductor contains at least one element selected from the group consisting of Mg, Al, Si, Ca, Ti, V, Ga, Sr, Y, Nb, Sn, Sb, Ba, Hf, Ta, W, Bi, and lanthanoids.

3. An ion conductive powder (202, 204, 206) according to any one of claims 1 to 2, which further contains at least one of a lithium halide and a complex hydride.

4. An ion conductive powder (202, 204, 206) according to any one of claims 1 to 3, wherein the powder of the lithium-ion-conductive solid electrolyte has a mean particle size of 0.1 μm or more.

5. An ion conductive powder (202, 204, 206) according to any one of claims 1 to 3, wherein the powder of the lithium-ion-conductive solid electrolyte has a mean particle size of 0.5 μm or more.

6. An ion conductive powder (202, 204, 206) according to any one of claims 1 to 5, wherein the powder of the lithium-ion-conductive solid electrolyte has a mean particle size of 10 μm or less.

7. An ion conductive compact (202) formed from an ion conductive powder (202, 204, 206) as recited in any one of claims 1 to 6.

8. An electricity storage device (110) comprising a solid electrolyte layer (112), a cathode (114), and an anode (116), wherein at least one of the solid electrolyte layer (112), the cathode (114), and the anode (116) contains an ion conductive powder (202, 204, 206) as recited in any one of claims 1 to 6.

**Patentansprüche**

1. Ionenleitendes Pulver (202, 204, 206), umfassend einen Lithium-Ionen-leitenden Festelektrolyten, der ein Ionenleiter ist, der mindestens Li, Zr, La und O enthält und eine granatartige Struktur oder eine granatähnliche Struktur aufweist,

   wobei die Menge an $Li_2CO_3$, die in 1 g des Lithium-Ionen-leitenden Festelektrolyten enthalten ist, weniger als 3 mg beträgt, berechnet auf der Grundlage der Menge an $CO_2$, bestimmt durch temperaturprogrammierte Desorptionsmassenspektrometrie (TPD-MS) bei 500°C oder höher,
   wobei der Ionenleiter mindestens eines von Mg und Element A enthält (wobei A mindestens ein Element darstellt, das aus der Gruppe ausgewählt ist, die aus Ca, Sr und Ba besteht), und die in dem Ionenleiter enthaltenen Elemente die folgenden Molverhältnisbedingungen (1) bis (3) erfüllen:

   $$(1) \; 1{,}33 \leq Li \,/\, (La + A) \leq 3;$$

$$(2) \ 0 \leq \mathrm{Mg} \, / \, (\mathrm{La} + \mathrm{A}) \leq 0{,}5;$$

und

$$(3) \ 0 \leq \mathrm{A} \, / \, (\mathrm{La} + \mathrm{A}) \leq 0{,}67.$$

**2.** Ionenleitendes Pulver (202, 204, 206) nach Anspruch 1,
wobei der Ionenleiter mindestens ein Element enthält, das ausgewählt ist aus der Gruppe bestehend aus Mg, Al, Si, Ca, Ti, V, Ga, Sr, Y, Nb, Sn, Sb, Ba, Hf, Ta, W, Bi und Lanthanoiden.

**3.** Ionenleitendes Pulver (202, 204, 206) nach einem der Ansprüche 1 bis 2, das ferner mindestens eines von einem Lithiumhalogenid und einem komplexen Hydrid enthält.

**4.** Ionenleitendes Pulver (202, 204, 206) nach einem der Ansprüche 1 bis 3,
wobei das Pulver des lithiumionenleitenden Festelektrolyten eine mittlere Teilchengröße von 0,1 $\mu$m oder mehr hat.

**5.** Ionenleitendes Pulver (202, 204, 206) nach einem der Ansprüche 1 bis 3,
wobei das Pulver des lithiumionenleitenden Festelektrolyten eine mittlere Teilchengröße von 0,5 $\mu$m oder mehr hat.

**6.** Ionenleitendes Pulver (202, 204, 206) nach einem der Ansprüche 1 bis 5,
wobei das Pulver des lithiumionenleitenden Festelektrolyten eine mittlere Teilchengröße von 10 $\mu$m oder weniger hat.

**7.** Ionenleitender Preßling (202), der aus einem ionenleitenden Pulver (202, 204, 206) nach einem Ansprüche 1 bis 6 gebildet ist.

**8.** Elektrizitätsspeichervorrichtung (110), die eine Festelektrolytschicht (112), eine Kathode (114) und eine Anode (116) aufweist,
wobei mindestens eine der Festelektrolytschicht (112), der Kathode (114) und der Anode (116) ein ionenleitendes Pulver (202, 204, 206) enthält, wie es in einem der Ansprüche 1 bis 6 angegeben ist.

## Revendications

**1.** Poudre conductrice d'ions (202, 204, 206) comprenant un électrolyte solide conducteur d'ions lithium qui est un conducteur d'ions contenant au moins Li, Zr, La et O et ayant une structure de type grenat ou une structure analogue à celle d'un grenat, où la quantité de $Li_2CO_3$ contenue dans 1 g de l'électrolyte solide conducteur d'ions lithium est inférieure à 3 mg, calculée sur la base de la quantité de $CO_2$ déterminée par spectrométrie de masse à désorption programmée en température (TPD-MS) à 500°C ou plus, où le conducteur d'ions contient au moins l'un de Mg et de l'élément A (où A représente au moins un élément choisi dans le groupe consistant en Ca, Sr et Ba), et les éléments contenus dans le conducteur d'ions satisfont les conditions de rapport molaire (1) à (3) suivantes:

$$(1) \qquad 1{,}33 \leq \mathrm{Li}/(\mathrm{La} + \mathrm{A}) \leq 3;$$

$$(2) \qquad 0 \leq \mathrm{Mg}/(\mathrm{La} + \mathrm{A}) \leq 0{,}5; \ \mathrm{et}$$

$$(3) \qquad 0 \leq \mathrm{A}/(\mathrm{La} + \mathrm{A}) \leq 0{,}67.$$

**2.** Poudre conductrice d'ions (202, 204, 206) selon la revendication 1, où le conducteur d'ions contient au moins un élément choisi dans le groupe consistant en Mg, Al, Si, Ca, Ti, V, Ga, Sr, Y, Nb, Sn, Sb, Ba, Hf, Ta, W, Bi et les lanthanides.

**3.** Poudre conductrice d'ions (202, 204, 206) selon l'une quelconque des revendications 1 à 2, qui contient en outre au moins l'un d'un halogénure de lithium et d'un hydrure complexe.

**4.** Poudre conductrice d'ions (202, 204, 206) selon l'une quelconque des revendications 1 à 3, où la poudre de l'électrolyte solide conducteur d'ions lithium a une granulométrie moyenne de 0,1 $\mu$m ou plus.

**5.** Poudre conductrice d'ions (202, 204, 206) selon l'une quelconque des revendications 1 à 3, où la poudre de l'électrolyte solide conducteur d'ions lithium a une granulométrie moyenne de 0,5 $\mu$m ou plus.

**6.** Poudre conductrice d'ions (202, 204, 206) selon l'une quelconque des revendications 1 à 5, où la poudre de l'électrolyte solide conducteur d'ions lithium a une granulométrie moyenne de 10 $\mu$m ou moins.

**7.** Compact conducteur d'ions (202) formé à partir d'une poudre conductrice d'ions (202, 204, 206) selon l'une quelconque des revendications 1 à 6.

**8.** Dispositif de stockage d'électricité (110) comprenant une couche d'électrolyte solide (112), une cathode (114) et une anode (116), où au moins l'une de la couche d'électrolyte solide (112), de la cathode (114) et de l'anode (116) contient une poudre conductrice d'ions (202, 204, 206) selon l'une quelconque des revendications 1 à 6.

# FIG. 1

## FIG. 2

| SAMPLE No. | COMPOSITION OF ION CONDUCTIVE POWDER COMPACT (vol%) | AIR EXPOSURE OF LLZ-MgSr POWDER | LITHIUM ION CONDUCTIVITY (S/cm) | DIFFERENCE IN LITHIUM ION CONDUCTIVITY (S/cm) |
|---|---|---|---|---|
| S1 | LLZ-MgSr<br>--------<br>100 | NO | $4.2 \times 10^{-6}$ | $4.08 \times 10^{-6}$ |
| S2 | LLZ-MgSr<br>--------<br>100 | 24-HOUR EXPOSURE | $1.2 \times 10^{-7}$ | |
| S3 | LLZ-MgSr : LiI<br>--------<br>50 : 50 | NO | $1.9 \times 10^{-5}$ | $1.59 \times 10^{-5}$ |
| S4 | LLZ-MgSr : LiI<br>--------<br>50 : 50 | 24-HOUR EXPOSURE | $3.1 \times 10^{-6}$ | |

EP 3 789 346 B1

# FIG. 3

| AIR EXPOSURE OF LLZ-MgSr POWDER | AMOUNT OF $Li_2CO_3$ CONTAINED IN 1 g OF SAMPLE (S/cm) |
|---|---|
| NO | 0.49 |
| 24-HOUR EXPOSURE | 3.38 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017199539 A
- WO 2017123836 A1
- JP 2016160160 A
- JP 2014172812 A
- EP 3041071 A1
- KR 20140099956 A

### Non-patent literature cited in the description

- **LICHT STUART et al.** Electronic Supplementary Information to "Chemical Mechanism of the High Solubility Pathway for the Carbon Dioxide Free Production of Iron. *Chem. Commun.*, 2011, vol. 47, 3081-3083